Europäisches Patentamt

**European Patent Office**

**Office européen des brevets**

(19)

(11) Publication number: **0 042 010**
**B1**

(12) # EUROPEAN PATENT SPECIFICATION

(45) Date of publication of patent specification: **08.08.84**

(51) Int. Cl.³: **E 21 C 3/00, F 16 H 21/52**

(21) Application number: **80103285.5**

(22) Date of filing: **12.06.80**

(54) **Power operated tool including a mechanism for converting rotary motion to reciprocatory motion.**

(43) Date of publication of application:
**23.12.81 Bulletin 81/51**

(45) Publication of the grant of the patent:
**08.08.84 Bulletin 84/32**

(84) Designated Contracting States:
**AT BE CH DE FR IT LI LU NL SE**

(56) References cited:
**EP - A - 0 037 095**
**CH - A - 553 628**
**DE - A - 2 326 087**
**DE - A - 2 734 634**
**DE - B - 1 938 660**
**FR - A - 544 597**
**GB - A - 2 021 654**
**US - A - 1 711 846**
**US - A - 1 954 411**
**US - A - 2 385 439**
**US - A - 3 525 267**
**US - A - 3 881 554**

**MACHINE DESIGN, 10 June 1976 Penton S.L.
RICE "3-D Linkages Simplify Complex
Mechanisms" pages 100 to 104**

(73) Proprietor: **Black & Decker Inc.**
**Drummond Plaza Office Park 1423 Kirkwood
Highway**
**Newark Delaware 19711 (US)**

(72) Inventor: **Simpson, Frank F.**
**No. 1 Boleyn Close**
**Staines Middlesex (GB)**

(74) Representative: **Kador, Ulrich, Dr. et al,**
**Corneliusstrasse 15**
**D-8000 München 5 (DE)**

Courier Press, Leamington Spa, England.

## Description

This invention relates to a power operated tool incorporating a mechanism for converting rotary motion to reciprocatory motion.

One known mechanism used in such a tool is the crank and connecting rod mechanism in which a first member to be reciprocated is pivotably connected to one end of a connecting rod whose other end is rotatably mounted on a crank, the axis of rotation of the crank being perpendicular to the path of reciprocation. This mechanism is quite satisfactory for a wide range of applications but in some circumstances the fact that the motion of the reciprocated member is not Simple Harmonic Motion is a disadvantage. Also the mechanism is necessarily quite long, especially if motion approximating to Simple Harmonic Motion is to be achieved, and this can in some circumstances be a disadvantage. One known alternative to the connecting rod is the "Scotch Yoke" mechanism. In this mechanism the crank pin is mounted in a slot or guide channel on the member to be reciprocated, the slot or channel extending perpendicular to the path of reciprocation. This mechanism has the advantage that it is much more compact than the connecting rod mechanism and that the motion of the reciprocated member is Simple Harmonic Motion. However, in order to avoid excessive wear of the coupling between the crank pin and the slot or guide the construction of the mechanism must be quite sophisticated and consequently this "Scotch Yoke" mechanism is unduly expensive for certain applications.

In United States Patent 1,711,846 is disclosed a dental filing device for tooth root passages in which a file is held in a clamping member which is reciprocated and cyclically oscillated by a crank pin at the end of a rotary drive shaft drivingly engaging in a bore in the clamping member. In this way the rotary motion of the drive shaft is converted to reciprocatory motion.

According to the present invention, there is provided a power operated tool including a prime mover, a working output member and a power transmission mechanism arranged to transmit motion of the prime mover to the working output member, the power transmission mechanism including a first member mounted for reciprocatory motion, a link, and a second member mounted for rotary motion about an axis transverse to the path of reciprocatory motion of the first member, the link being coupled at one end to the first member and at the other end to the second member at a position spaced from the axis of rotation of the second member such that rotation of the second member reciprocates the first member and also imparts a cyclic partial rotation to the first member during said reciprocation, characterized by said one end of the link being rigidly connected to the first member and said other end of the link being mounted for swivelling and sliding movement relative to a bore in the second member, the axis of said bore being inclined to the axis of rotation of the second member and diverging away from said axis of rotation with increasing distance from said one end of the link.

With this arrangement, which at first might seem undesirable since the link is never aligned with the direction of sliding movement, the inclination of the link to the direction of sliding movement in the middle portion of the path of reciprocating motion is reduced and accordingly the link can be made of greater cross-section which allows the link to be made more cheaply. The arrangement also helps to balance the forces applied to the first member when it is driven by the second member.

This form of power transmission mechanism has considerable advantages when incorporated in a power operated tool. In particular it shares the advantage of compactness of the "Scotch Yoke" mechanism but avoids the complicated and expensive coupling required with a "Scotch Yoke" mechanism.

Said one end of the link may be pivotally connected to a bush which is slidably and rotatably mounted in the second member. In another such arrangement which is particularly simple and cheap, said one end of the link is formed with a rounded end mounted in the bore of the second member for sliding and swivelling movement within the bore.

In an alternative arrangement said one end of the link is slidably mounted in a rounded bush which is mounted for swivelling movement relative to the second member.

The second member may be in the form of a crank disc or a crank arm having coupling means eccentrically mounted thereon for coupling the link to the second member.

In certain applications a partial rotation of the first member is advantageous: for example in a pneumatic tool it may be desirable for the first member to cover over certain ports during its forward stroke and for the ports to be open during its return stroke. If such a partial rotation of the member to be driven is, however, undesirable, a third member may be provided, the third member being rotatably coupled to the first member in such a way that the reciprocation and partial rotation of the first member imparts reciprocation but not rotation to the third member.

The invention is applicable to a percussive drill. The first member may be the piston or cylinder of an air spring hammer arrangement. Alternatively the first member may be drivingly connected to the piston or cylinder of an air spring hammer arrangement.

Said other end of the link may be coupled to the second member in a manner that allows sliding movement of the link relative to the second member in a direction parallel to the axis of rotation of the second member. With this arrangement the link can be aligned with the direction of sliding movement at the ends of the path of reciprocatory motion of the first member but is inclined to the direction of sliding movement in the middle portion of the path of reciprocatory motion. In order to accommodate the inclination at least a portion of the link may need to be of narrow cross-section and so that the link is sufficiently strong this may result in the link having to be made of particularly strong and therefore expensive material.

The mechanism may be incorporated in a wide variety of power operated tools. For example the mechanism may be used in pneumatic tools; in particular the mechanism may be used to drive the piston of a pneumatic hammer drill as already indicated or it may be used to drive the piston of a compressor in which case partial rotation of the piston enabling selective covering over of ports may be a considerable advantage. The mechanism is applicable to hydraulic devices as well as pneumatic devices; for example the mechanism may be used in a hydraulic pump.

The mechanism may also be used in power operated reciprocating tools whether or not they are pneumatically operated. For example the mechanism may be used in a jig saw, a zimmer saw or special purpose tools such as a cylindrical hone or a filing machine.

By way of example certain illustrative embodiments of the invention will now be described with reference to the accompanying drawings, in which:

Fig. 1 is a perspective view of a first form of mechanism which may be incorporated in a power-operated tool;

Fig. 2 is a perspective view of a modified part of the mechanism of Fig. 1;

Fig. 3 is a perspective view of a modified form of the mechanism of Fig. 1;

Fig. 4 is a diagram showing the amplitude of certain movements in the mechanism;

Figs. 5 and 6 are schematic part sectional views illustrating a modification of the mechanism;

Fig. 7 is a perspective schematic view illustrating the drive mechanism of a hedge trimmer embodying the invention;

Fig. 8 is an exploded perspective view of a part of the hedge trimmer;

Fig. 9 is a perspective schematic view illustrating the drive mechanism of a reciprocating saw or jig saw embodying the invention; and

Fig. 10 is a perspective schematic view illustrating another drive mechanism of another reciprocating saw embodying the invention.

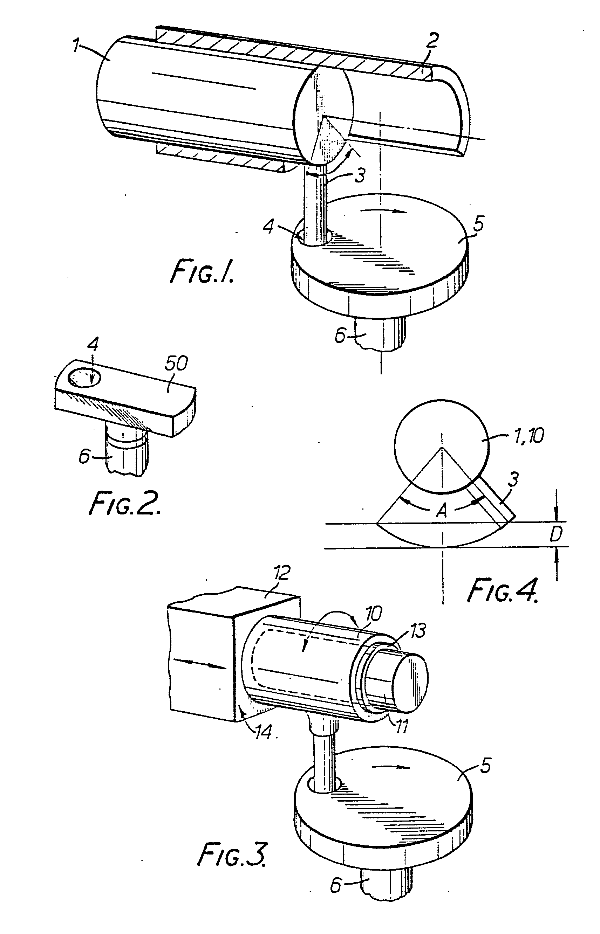

Referring first to Fig. 1, there is shown a mechanism for converting rotary motion to reciprocatory motion comprising a piston member 1 mounted in a cylindrical guide tube 2 for reciprocating movement along the tube. A link 3 is attached at one end to one end of the piston member 1 and at its other end the link 3 is received in a bore 4 near the edge of a crank disc 5. The crank disc 5 has a drive shaft 6 which in use is rotated by a motor (not shown). The link 3 is arranged in the bore 4 in such a way as to permit the link 3 to swivel in the bore and to slide up and down the bore.

Fig. 1 shows the piston member 1 in its most forward position with the link 3 vertical and lying in the same plane as the axis of reciprocation of the piston member 1 and the axis of rotation of the crank disc 5. When, in use, the crank disc is rotated in the direction of the arrow by a prime mover (not shown) the lower end of the link 3 is drawn backwards and sideways; the backwards movement of the lower end of the link 3 is accommodated by the piston member 1 being drawn backwards; the sideways movement of the lower end of the link 3 is accommodated by pivotal movement of the link 3 which in turn causes partial rotation of the piston member 1 about its own axis. The pivotal movement of the link 3 causes the link to swivel relative to the crank disc 5 and also causes the link to rise up the bore 4. Once the crank disc has rotated through a quarter turn from the position shown in Fig. 1, the link 3 is in its most inclined position and the piston member 1 is at the limit of its partial rotation and is at the centre of its path of reciprocation. During the next (second) quarter turn of the crank disc 5 the link 3 returns to the orientation shown in Fig. 1 but the piston member 1 continues its rearward movement and finally reaches the rearward end of its stroke. During the next (third) quarter turn of the crank disc 5 the link 3 pivots to the opposite side causing partial rotation of the piston member 1 in the opposite direction and the piston member 1 travels the first half of its return stroke. During the final (fourth) quarter turn of the crank disc 5 the link 3 returns to the orientation shown in Fig. 1 and the piston member 1 completes its return stroke.

Since the link 3 remains in a vertical plane throughout the rotation of the crank disc 5, the reciprocatory motion of the piston member 1 is Simple Harmonic Motion. The partial cyclic rotation of the piston member 1 is a modified form of Simple Harmonic Motion and is 90 degrees out of phase with the reciprocatory motion. Thus for almost all of the forward stroke of the piston member 1 the piston member is rotated to one side of its central position and for almost all of the return stroke the piston member is rotated to the opposite side of its central position. This makes it simple to arrange for ports (not shown) in the guide tube 2 to be covered during the forward stroke of the piston member and uncovered during its rearward stroke (or *vice versa* if desired).

The crank disc 5 shown in Fig. 1 may be replaced by the crank arm 50 shown in Fig. 2.

In a case where reciprocation of a member without rotation is desired the arrangement shown in Fig. 3 can be used. In this arrangement the upper end of the link 3 is connected to a hollow cylindrical member 10 which is rotatably mounted on a shaft 11 projecting from a piston member 12. The hollow cylindrical member 10 is held in fixed axial relationship with the piston member 12 by a collar 13 on the shaft 11 and by an abutment face 14 on the piston member 12. Thus when the crank disc 5 is rotated although the cylindrical member 10 is subjected to a cyclic partial rotation the piston member 12 reciprocates without rotation.

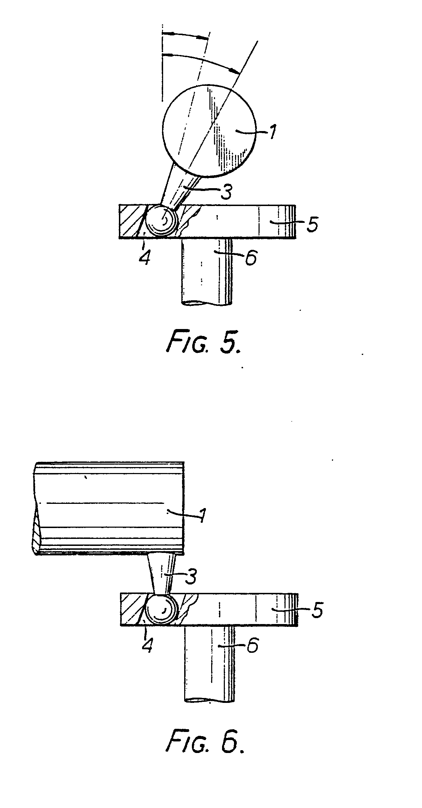

Fig. 4 shows the amplitude of the angular movement of the link 3 and of the sliding of the link 3 relative to the bore 4 during rotation of the crank disc 5 for any of the mechanisms of Figs. 1 to 3. The angle A which is of the order of 80° in this particular example is the amplitude of the angular movement of the link 3 and the distance D is the amplitude of the movement of the link 3 in the bore 4.

In order to accommodate the movement of the link 3 in the bore 4 Figs. 5 and 6 show that the bore 4 is inclined to the axis of rotation of the crank disc 5 and diverges away from the axis of rotation of the crank disc with increasing distance from the upper end of the link 3. The axis of the bore 4 and the axis of rotation of the crank disc 5 are co-planar and the inclination of the base to the axis of rotation is about half the maximum inclination of the link 3 to the axis of rotation.

Fig. 5 shows the mechanism in the mid-stroke position and it can be seen from the drawing that the inclination of the link 3 to the bore 4 is halved over that which pertains with a non-inclined bore. Fig. 6 shows the mechanism in the forward end-stroke position and it can be seen from the drawing that the link 3 is now inclined to the bore 4 whereas with a non-inclined bore the link 3 would be aligned with the bore 4; the inclination of the link 3 to the bore 4 in the end-stroke position is about the same as in the mid-stroke position.

From the above, it will be clear that the degree of necking required of the link 3 to accommodate the inclination of the link to the bore is considerably reduced in the embodiment of Figs. 5 and 6.

Another advantage of the inclined bore is apparent from Fig. 6. The force applied by the crank disk 5 to the piston member 1 is applied at the bottom of the link 3 away from the axis of the piston member 1. Thus, if the bore 4 is perpendicular to the crank disk 5 an anticlockwise couple is applied to the piston member 1 as it is accelerated rearwardly while a clockwise couple is applied to accelerate it forwardly. However, with the inclined bore the force applied by the crank disk 5 to accelerate the piston member 1 rearwardly has a downward component which provides a clockwise couple on the piston member 1 counteracting the anticlockwise couple, and similarly the force applied by the crank disk 5 to accelerate the piston member 1 forwardly has an upward component which provides an anticlockwise couple on the piston member 1 counteracting the clockwise couple. Thus the provision of the inclined bore also helps to balance the forces acting on the piston member 1.

A mechanism of the form described above has various advantages. The simplicity of the components of the mechanism make it easy and cheap to manufacture. The mechanism is also compact and of low weight and is simple to balance: the provision of a single weight on the crank arm 50 provides good counter-balance to the transverse forces arising from the swinging movement of the link 3. The movement of the reciprocated member is Simple Harmonic Motion which in some applications is an important advantage. Also the mechanism can be used to impart a partial rotation to a member in addition to reciprocating the member.

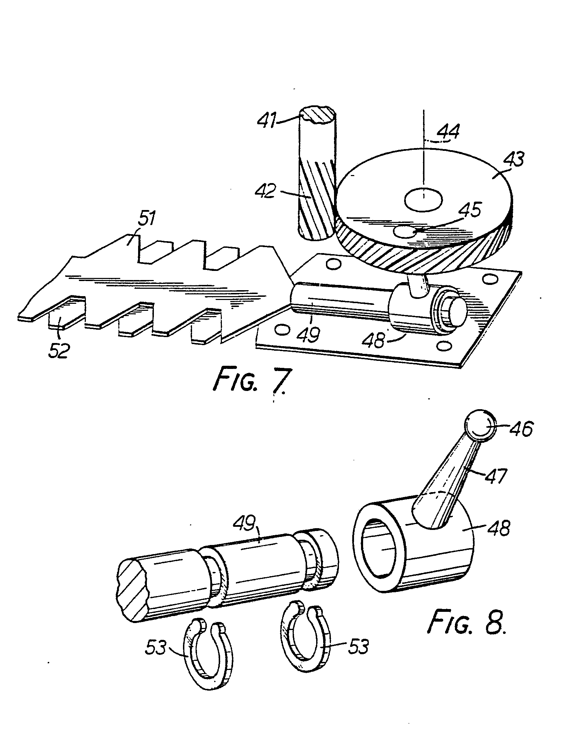

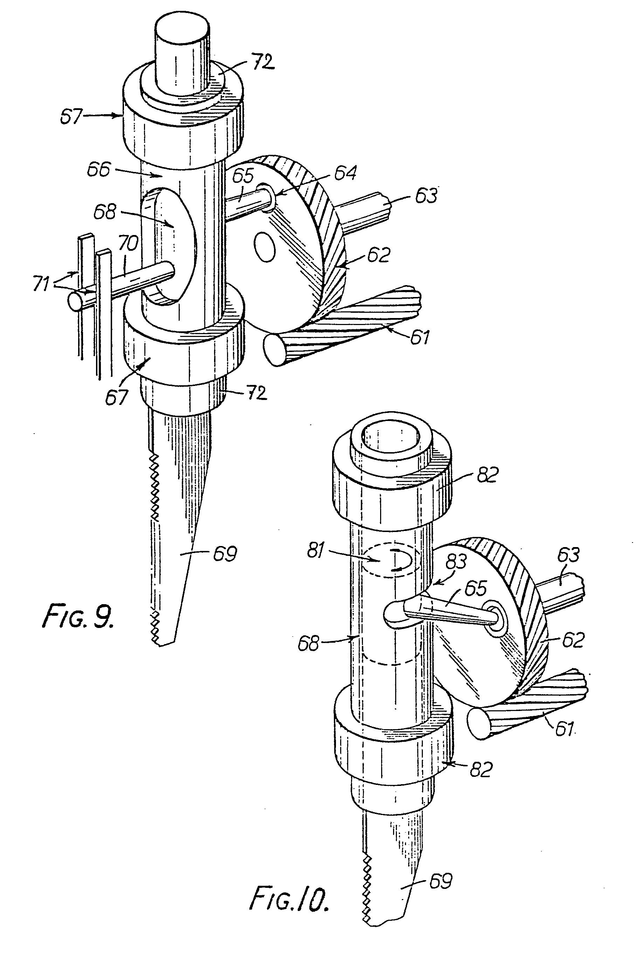

Figs. 7 and 8 illustrate how the mechanism shown in Fig. 3 may be incorporated in a hedge trimmer. The hedge trimmer has a motor (not shown) with an output shaft 41 on the end of which a pinion 42 is formed. The pinion meshes with a crank disc 43 mounted for rotation about its central axis 44. The crank disc is of the construction shown in Fig. 3 and has a bore 45 in which the ball shaped end 46 of a link 47 is slidably and swivelably received. The other end of the link 47 is connected to a short sleeve 48 rotatably mounted on a shaft 49 and held against movement along the shaft by clips 53. The shaft 49 is connected to the blade 51 of the hedge trimmer, the blade 51 being mounted on a fixed blade 52 for reciprocating movement relative thereto.

When in use the motor of the hedge trimmer is actuated, the crank disc 43 (corresponding to the crank disc 5 in Fig. 3) is rotated so that the sleeve 48 is reciprocated and subjected to a cyclic partial rotation. The reciprocation of the sleeve 48 is transmitted to the blade 51 reciprocating the blade 51 relative to the fixed blade 52.

Fig. 9 illustrates one way in which the mechanism shown in Fig. 3 may be incorporated in a reciprocating saw. The reciprocating saw has a motor (not shown) with an output shaft on the end of which a pinion 61 is formed. The pinion meshes with a crank disc 62 mounted for rotation on a central shaft 63. The crank disc has a bore 64 in which a link 65 is received, the coupling of the link 65 in the bore 64 being of any of the forms shown in Figs. 5 to 7. The other end of the link 65 is connected to a sleeve 66 which is mounted for rotation and reciprocation in bearings 67 fixed in the housing (not shown) of the saw.

A plunger 68 carrying a saw blade 69 is rotatably mounted in the sleeve 66. Relative axial movement of the plunger 68 relative to the sleeve 66 is prevented by any suitable means; in the illustrated arrangement shoulders 72 are provided on the plunger 68 at each end of the sleeve 66. The plunger 68 is prevented from rotating by any suitable means; in the illustrated arrangement a rod 70 is fixed to the plunger at one end and the other end is constrained to move between a pair of parallel guides 71 fixed to the housing (not shown) of the saw.

When in use the motor of the saw is actuated the crank disc 62 (corresponding to the crank disc 5 in Fig. 3) is rotated so that the sleeve 66 is reciprocated and subjected to a cyclic partial rotation. The reciprocation of the sleeve 66 is transmitted to the plunger 68 thereby reciprocating the blade 69. Turning of the blade 69 is prevented by the engagement of the rod 70 between the guides 71.

Fig. 10 illustrates a modified form of the arrangement shown in Fig. 9. In the arrangement of Fig. 10 the link 65 is connected to an inner cylindrical body 81 through slot 83 in the plunger 68 which in this arrangement is hollow. The plunger 68 carries the saw blade 69 as before and is slidably but non-rotatably mounted in bearings 82 fixed in the housing (not shown).

Thus, in operation of the arrangement shown in Fig. 10, the cylindrical body 81 is reciprocated and subjected to cyclic partial rotation by the link 65 driven by the crank disc 62. The engagement of the link 65 against the top and bottom walls of the slot 83 transmits the reciprocating movement to the plunger 68 thereby reciprocating the saw blade 69.

In the above description the incorporation of the mechanism in various power operated tools is described. The particular tools are examples of tools in which the mechanism may be incorporated; the mechanism may be incorporated in other power operated tools.

## Claims

1. A power operated tool including a prime mover (21), a working output member (38, 51, 69 or 96) and a power transmission mechanism arranged to transmit motion of the prime mover to the working output member, the power transmission mechanism including a first member (1, 10, 32, 48, 66, 81 or 96) mounted for reciprocatory motion, a link (3, 39, 47, 65 or 95), and a second member (5, 26, 43, 62 or 92) mounted for rotary motion about an axis transverse to the path of reciprocatory motion of the first member, the link (3, 39, 47, 65 or 95) being coupled at one end to the first member and at the other end to the second member (5, 26, 43, 62 or 92) at a position spaced from the axis of rotation of the second member such that rotation of the second member reciprocates the first member and also imparts a cyclic partial rotation to the first member during said reciprocation, characterized by said one end of the link (3, 39, 47, 65 or 95) being rigidly connected to the first member (1, 10, 32, 48, 66, 81 or 96) and said other end of the link being mounted for swivelling and sliding movement relative to a bore in the second member (5, 26, 43, 62 or

92), the axis of said bore (4) being inclined to the axis of rotation of the second member and diverging away from said axis of rotation with increasing distance from said one end of the link.

2. The power operated tool of Claim 1, characterized in that the angle of inclination of said bore axis to said axis of rotation is half the maximum angle of inclination of the link (3) to said axis of rotation.

3. The power operated tool of Claim 1 or 2, characterized in that said first member comprises a sleeve (66) rotatably mounted on a plunger (68) connected to said working output member (69), said sleeve (66) having a slot therein intermediate the ends thereof, a rod (70) fixed at one end to said plunger (68) and extending outwardly through said slot in the sleeve (66), and a pair of parallel guides (71) between which the other end of said rod (70) is constrained to move, whereby cylic rotation of said plunger (68) is prevented.

4. The power operated tool of Claim 1 or 2, characterized in that said first member comprises a cylindrical body (81) rotatably mounted in the sleeve-like plunger (68) restrained against rotation, said sleeve-like plunger (68) having a slot (83) therein through which said link (65) extends and can cyclically rotate relative to said sleeve-like plunger (68), whereby reciprocatory motion only is transmitted to said sleeve-like plunger (68).

5. The power operated tool of Claim 3 or 4, characterized in that the working output member is a cutting blade (69) reciprocated by said plunger (68).

## Patentansprüche

1. Motorisch angetriebenes Werkzeug, mit einem Antrieb (21). einem Arbeitsteil (38, 51, 69 oder 96) und einem Kraftübertragungsmechanismus, der die Bewegung des Antriebs auf das Arbeitsteil überträgt, und der ein für hin- und hergehende Bewegung montiertes erstes Teil (1, 10, 32, 48, 66, 81 oder 96) ein Verbindungsglied (3, 39, 47, 65 oder 95) und ein zweites Teil (5, 26, 43, 62 oder 92) aufweist, welches zur Drehbewegung um eine quer zur Bahn der Hin- und Herbewegung des ersten Teils angeordnete Achse montiert ist, wobei das Verbindungsglied (3, 39, 47, 65 oder 95) mit einem Ende an das erste Teil und mit dem anderen Ende an das zweite Teil (5, 26, 43, 62 oder 92) an einer von der Drehachse des zweiten Teils beabstandeten Stelle gekoppelt ist, so daß die Drehung des zweiten Teils das erste Teil hin- und herbewegt und außerdem das erste Teil während dessen Hin- und Herbewegung eine zyklische Teildrehbewegung vermittelt, dadurch gekennzeichnet, daß das eine Ende des Verbindungsglieds (3, 39, 47, 65, 95) starr mit dem ersten Teil (1, 10, 32, 48, 66, 81 oder 96) verbunden ist, und daß das andere Ende des Verbindungsglieds zur Ermöglichung einer Schwenk- und Gleitbewegung in Bezug auf eine Bohrung in dem zweiten Teil (5, 26, 43, 62 oder 92) montiert ist, wobei die Achse der Bohrung (4) zu der Drehachse des zweiten Teils geneigt ist und mit zunehmendem Abstand von dem einen Ende des Verbindundungsglieds von der Drehachse abweicht.

2. Motorisch angetriebenes Werkzeug nach Anspruch 1 d.g., daß der Neigungswinkel der Bohrungsachse in Bezug auf die Drehachse halb so groß ist wie der maximale Neigungswinkel des Verbindungsglieds (3) in Bezug auf die Drehachse.

3. Motorisch angetriebenes Werkzeug nach Anspruch 1 oder 2, d.g., daß das erste Teil eine Hülse (66) aufweist, die drehbar auf einem mit dem Arbeitsteil (69) verbundenen Kolben (68) montiert ist, daß die Hülse (66) zwischen ihren Enden einen Schlitz aufweist, daß an einem Ende des Kolbens (68) eine Stange (70) befestigt ist, die sich durch den Schlitz in der Hülse (66) nach außen erstreckt, und daß ein Paar von parallelen Führungen (71) vorgesehen ist, zwischen denen das andere Ende der Stange (70) beschränkt bewegbar ist, wodurch die zyklische Drehung des Kolbens (68) verhindert wird.

4. Motorisch angetriebenes Werkzeug nach Anspruch 1 oder 2, d.g., daß das erste Teil einen zylindrischen Körper (81) aufweist, der drehbar in dem drehfesten hülsenähnlichen Kolben (68) montiert ist und daß der hülsenähnliche Kolben (68) einen Schlitz (83) aufweist, durch den hindurch sich das Verbindungsglied (65) erstreckt, welches sich in Bezug auf den hülsenähnlichen Kolben (68) zyklisch zu drehen vermag, wodurch die Hin- und Herbewegung nur auf den hülsenähnlichen Kolben (68) übertragen wird.

5. Motorisch angetriebenes Werkzeug nach Anspruch 3 oder 4, d.g., daß das Arbeitsteil ein von dem Kolben (68) hin- und herbewegtes Schneidblatt (69) ist.

## Revendications

1. Outil motorisé comprenant un moteur, un organe de travail (38, 51, 69 ou 96) et un mécanisme de transmission de l'énergie disposé pour transmettre le mouvement du moteur à l'organe de travail, le mécanisme de transmission de l'énergie comprenant un premier élément (1, 10, 32, 48, 66, 81 ou 96) monté pour un mouvement alternatif, une bielle (3, 39, 47, 65 ou 95) et un second élément (5, 26, 43, 62 ou 92) monté pour un mouvement de rotation autour d'un axe transversal par rapport au parcours du mouvement alternatif du premier élément, la bielle (3, 39, 47, 65 ou 95) étant accouplée par une première extrémité au premier élément et par l'autre extrémité au second élément (5, 26, 43, 62 ou 92) dans une position espacée de l'axe de rotation du second élément telle que la rotation du second élément impartit un mouvement alternatif au premier élément et impartit aussi une rotation partielle cyclique au premier élément pendant ladite alternation, outil caractérisé en ce que ladite première extrémité de la bielle (3, 39, 47, 65 ou 95) est reliée rigidement au premier élément (1, 10, 32, 48, 66, 81 ou 96) et en ce que ladite autre extrémité de la bielle est montée pour un mouvement pivotant et coulissant relativement à un alésage (4) dans le second élément (5, 26, 43, 62 ou 92), l'axe dudit alésage étant incliné par rapport à l'axe de rotation du second élément et s'écartant dudit axe de rotation à mesure qu'augmente la distance de l'alésage (4) par rapport à ladite première extrémité de la bielle (3).

2. Outil motorisé suivant la revendication 1, caractérisé en ce que l'angle d'inclinaison de l'axe de l'alésage (4) par rapport à l'axe de rotation du second élément est la moitié de l'angle d'inclinaison maximale de la bielle (3) par rapport audit axe de rotation.

3. Outil motorisé suivant la revendication 1 ou 2, caractérisé en ce que ledit premier élément comprend un manchon (66) monté à rotation sur un plongeur (68) relié à l'organe de travail (69), le manchon (66) ayant une fente située entre ses extrémités, une tige (70) fixée à une extrémité du plongeur (68) et s'étendant extérieurement à travers ladite fente dans le manchon (66), et une paire de guides parallèles (71) entre lesquels l'autre extrémité de la tige (70) est contrainte à se déplacer, ce qui empêche une rotation cyclique du plongeur (68).

4. Outil motorisé suivant la revendication 1 ou 2, caractérisé en ce que ledit premier élément comprend un corps cylindrique (81) monté à rotation dans le plongeur du type manchon (68) empêché de tourner, le plongeur du type manchon (68) présentant une fente (83) à travers laquelle la bielle (65) s'étend et peut tourner cycliquement relativement au plongeur du type manchon (68), de sorte que seul le mouvement alternatif est transmis au plongeur du type manchon (68).

5. Outil motorisé suivant la revendication 3 ou 4, caractérisé en ce que l'organe de travail est une lame de coupe (69) à laquelle le plongeur (68) impartit un mouvement alternatif.

FIG.1.

FIG.2.

FIG.4.

FIG.3.

FIG. 5.

FIG. 6.

FIG. 7

FIG. 8.

FIG. 9.

FIG. 10.